# EUROPÄISCHE PATENTSCHRIFT

(11) **EP 0 995 281 B1**
(45) Veröffentlichungstag und Bekanntmachung des Hinweises auf die Patenterteilung: **12.09.2001**
(21) Anmeldenummer: 98931813.4
(22) Anmeldetag: 09.07.1998
(51) Int. Cl.: H04B 10/06

(54) **DATEN-EMPFANGSSCHALTUNG FÜR INFRAROTSIGNALE**
DATA RECEPTION CIRCUIT FOR INFRARED SIGNALS
CIRCUIT DE RECEPTION DE DONNEES POUR SIGNAUX INFRAROUGES

(30) Priorität: 10.07.1997 AT 118897
(43) Veröffentlichungstag der Anmeldung: 26.04.2000
(73) Patentinhaber: EFKON- Entwicklung Forschung & Konstruktion von Sondermaschinen Ges.m.b.H., 8045 Graz (AT)
(72) Erfinder: PAMMER, Raimund, A-8020 Graz (AT); RIEDER, Helmut, A-8020 Graz (AT)
(74) Vertreter: Weinzinger, Arnulf, Dipl.-Ing.
(86) Internationale Anmeldenummer: AT9800168
(87) Internationale Veröffentlichungsnummer: WO9903218

(56) Entgegenhaltungen:
- WO-A-92/05645
- GB-A- 2 156 177
- US-A- 5 410 145
- "Optimum biasing of photodiodes as used in infrared communications" IBM TECHNICAL DISCLOSURE BULLETIN., Bd. 30, Nr. 6, November 1987, Seiten 213-214, XP002081511 NEW YORK US
- PATENT ABSTRACTS OF JAPAN vol. 009, no. 123 (E-317), 28. Mai 1985 & JP 60 010933 A (ZENERARU:KK), 21. Januar 1985
- PATENT ABSTRACTS OF JAPAN vol. 097, no. 005, 30. Mai 1997 & JP 09 008564 A (HITACHI LTD;HITACHI DEVICE ENG CO LTD), 10. Januar 1997

## Beschreibung

Die Erfindung betrifft eine Daten-Empfangsschaltung für Infrarotsignale gemäß dem einleitenden Teil von Anspruch 1.

Datensende- und Datenempfangsschaltungen für Infrarotsignale werden beispielsweise bei Fernsehgeräten für die Programmwahl, Lautstärkeregelung usw. verwendet. Auch für Straßenmaut-Systeme wurden bereits anstelle von Hochfrequenzsendern im Dezi- oder Zentimeterwellenlängenbereich Sender im Infrarotbereich mit Halbleiter-Lichtsendeelementen, wie Lumineszenzdioden oder Laserdioden, vorgeschlagen. Derartige Infrarot-Datenübertragungssysteme können mit folgenden Modulationsarten betrieben werden:
- AM: Amplitudenmodulation
- FM: Frequenzmodulation
- PSK: (Phase Shift Keying) Phasenumtastung
- ASK: (Amplitude Shift Keying) Amplitudenumschaltung
- ASK-OOSK: (ASK-On Off Shift Keying) ASK-Ein/Aus-Umschaltung
- PDM: (Pulse Duration Modulation) Pulsdauermodulation
- PPM: (Pulse Phase Modulation) Pulsphasenmodulation

In der Daten-Empfangsschaltung werden Germanium- oder Siliziumfotodioden als Infrarotdetektoren eingesetzt, wobei der resultierende "Fotostrom" verstärkt und ausgewertet wird. Wenn derartige Daten-Empfangsschaltungen in Umgebungen mit geringem Hintergrundlicht, z.B. im Inneren eines Gebäudes, im Schatten oder nur bei Nacht, verwendet werden, so genügen einfache Verstärker und Kompensationsschaltungen zur Unterdrückung des Hintergrundlichtstromes. Bei steigendem Hintergrundlichtstrom, insbesondere bei einem Betrieb der Empfänger im direkten Sonnenlicht, werden diese früheren Schaltungstechniken aber problematisch und letztlich unbrauchbar, da der hohe Hintergrundlichtstrom unter anderem ein hohes Stromrauschen bewirkt, in welchem die Nutzsignalströme, üblicherweise im nA-Bereich, untergehen.

In der GB 2 156 177 A ist ein Infrarot-Verstärker geoffenbart, der entsprechend dem einleitenden Teil des Anspruchs 1 mehrere Eingangskreise aufweist, die je mit einer Fotodiode als Infrarotdetektor und einem zugeordneten separaten Verstärker ausgebildet sind, und deren Signale zur Erhöhung der Nutzleistung, bei Unterdrückung von Störsignalen, einem Summierkreis zugeführt werden. Die Verstärker sind homogene Teilverstärker, deren Ausgänge an einem Summierpunkt zusammengeführt sind.

Aus der AT 376 083 B ist in von Schaltung zur Unterdrückung von elektromagnetischen Störungen bei Infrarot-Empfangseinrichtungen bekannt ist. Dabei sind jeweils zwei Gruppen von parallel geschalteten Fotodioden vorgesehen, wobei die einen Dioden über einen Vorwiderstand R1 mit einer positiven Versorgungsspannung und die anderen Dioden über einen Vorwiderstand mit der Masse verbunden sind. Von der einen Gruppe der Fotodioden werden Nutzsignale mit negativer Polarität über einen Kondensator dem einen Eingang des Differenzverstärkers zugeführt, während die Nutzsignale mit positiver Polarität über einen Kondensator dem anderen Eingang des Differenzverstärkers zugeführt werden. Auf diese Weise sollen am Ausgang des Differenzverstärkers die Nutzsignale summiert auftreten, während eine, z.B. von Rundfunksendern kommende, Störstrahlung unterdrückt wird. In einer Modifikation sind zusätzliche Operationsverstärker zwischen den Kondensatoren und den Eingängen des Differenzverstärkers DV vorgesehen, wobei diese Operationsverstärker als sog. Transimpedanzverstärker eine schnellere Signalverarbeitung ermöglichen sollen.

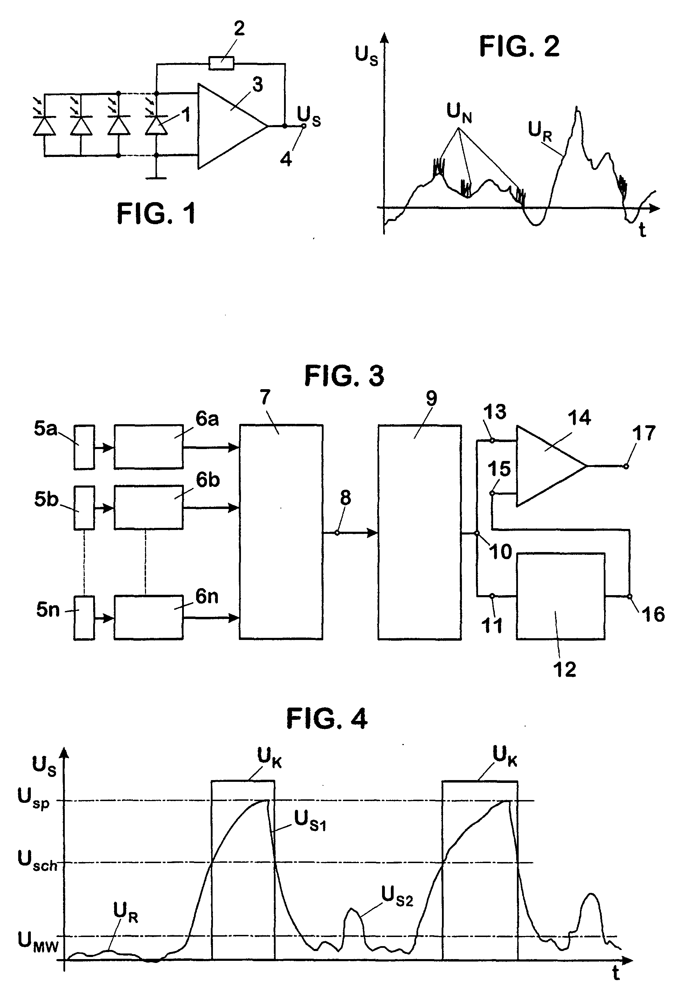

Auch bei der in der US 5 355 242 A gezeigten Schaltung zum Empfangen von Infrarotsignalen sind zwei Gruppen von parallel geschalteten Fotodioden vorgesehen, s.Fig.1, deren Nutzsignale über Transformatoren und Kondensatoren zu Transimpedanzverstärkern geleitet werden; die Sekundärwicklungen der Transformatoren sind gegensinnig gewickelt, um Nutzsignale mit positiver und negativer Polarität zu erhalten, welche - ähnlich wie bei der AT 376 083 B - über Transimpedanzverstärker, nach vorherigem Passieren eines Bandpaßfilters, zugeführt werden. Die Ausgänge des Differenzverstärkers sind über ein Tiefpaßfilter mit den Eingängen eines weiteren Differenzverstärkers verbunden, an dessen Ausgänge eine als Rauschsperre fungierende Tor-Schaltung angeschlossen ist. Die Summierung der Nutzsignale findet demnach bei dieser Schaltung am Verbindungspunkt der parallel geschalteten Fotodioden mit der Primärwicklung des jeweiligen Transformators statt.

Von Nachteil ist bei den bekannten Schaltungen, daß sich dann, wenn mehrere Infrarotdetektoren (Fotodioden) zueinander parallel geschaltet werden, um die Nutzleistung zu erhöhen, auch die Parallelkapazität der Dioden erhöht, wodurch wiederum die Schaltanstiegs- und Schaltabfallzeiten erhöht werden.

Aufgabe der Erfindung ist die Schaffung einer Daten-Empfangsschaltung der eingangs genannten Art, bei welcher einerseits kurze Schaltanstiegs- und -abfallzeiten erzielt werden, und bei der andererseits der Daten-Nutzsignal/Rausch-Abstand trotz eines durch hohes Hintergrundlicht hervorgerufenen hohen Stromrauschens groß ist.

Diese Aufgabe wird mit einer Daten-Empfangsschaltung wie in Anspruch 1 definiert gelöst.

Bei der vorliegenden Empfangsschaltung arbeiten die Transistor-Verstärker signalsynchron, weisen aber spontane Rauschphasen auf, die sich im Summierkreis nach dem Wahrscheinlichkeitsprinzip teilweise addieren und teilweise aufheben. Hingegen wird das Nutzsignal linear mit gleicher Phase im Summierkreis addiert. Insgesamt steigt dadurch das Signal/Rausch-Verhältnis stetig mit der Anzahl der verwendeten Verstärker an.

Gemäß einer vorteilhaften Ausgestaltung der Erfindung ist vorgesehen, daß der Ausgang des Summierkreises mit einem Eingang eines Komparators verbunden ist, dessen anderer Eingang mit dem Ausgang eines Schwellenwertgenerators verbunden ist, dessen Eingang an den Ausgang des Summierkreises angeschlossen ist. Auf diese Weise wird die Funktion eines AGC (Automatic Gain Control)-Verstärkerkreises simuliert, indem leistungsschwache Nutzsignale unterdrückt werden bzw. wird, wenn mehrere Sender vorhanden sind, wie etwa an einer Mautstelle bei einem StraßenMautsystem, nur der leistungsstärkste Sender empfangen; dies ist bei Mautsystemen mit mehreren Fahrspuren und entsprechenden Sendern im Hinblick auf eine "Spurselektivität" von besonderer Bedeutung.

In diesem Zusammenhang ist es auch günstig, wenn zwischen dem Ausgang des Summierkreises und dem einen Eingang des Komparators sowie dem Eingang des Schwellenwertgenerators ein Hauptverstärker vorgesehen ist. Durch diese Maßnahme kann der dynamische Bereich zur Weiterverarbeitung des Nutzsignales erhöht werden.

Für die automatische Schwellenwerteinstellung ist es weiters von besonderem Vorteil, daß der Schwellenwertgenerator durch Gleichrichtung und Glättung des Ausgangs-Signales des Summierkreises bzw. gegebenenfalls des Hauptverstärkers eine Summe aus dem Spitzenwert und dem Mittelwert dieses Signales in einem Schwellenwertsignal am Ausgang des Schwellenwertgenerators abgegeben wird.

Eine besonders vorteilhafte, einfache und rasch ansprechende Ausführung der Verstärker wird dadurch erhalten, dass die Verstärker der Eingangskreise Transistor-Verstärker sind. Die Transistoren können dabei einfache Bipolartransistoren sein. Der Summierkreis wird einfach und preiswert gehalten, weil er mit Kondensatoren gebildet ist, welche einerseits mit dem jeweiligen Verstärkerausgang und andererseits mit dem gemeinsamen Verknüpfungspunkt verbunden sind; vorteilhafterweise sind die Kondensatoren des Summierkreises an die Kollektorwiderstände der Transistoren angeschlossen.

Für die Schwellenwert-Bildung hat es sich schließlich im Hinblick auf kurze Ansprechzeiten und eine einfache Realisierung als günstig erwiesen, wenn der Eingang des Schwellenwertgenerators über eine Diode und einen in Serie liegenden Widerstand mit Masse verbunden ist, wenn der Verbindungspunkt zwischen der Diode und dem Widerstand an die Basis eines Transistors angeschlossen ist, an den ein den Spitzenwert des zugeführten Ausgangs-Signals des Summierkreises bzw. gegebenenfalls Hauptverstärkers speichernder Kondensator angeschlossen ist, und wenn ein weiterer Kondensator zur Erzielung des jeweiligen Schwellenwerts über eine Spannungsteilerschaltung an die Diode bzw. an den Kondensator angeschlossen ist.

Die Erfindung wird nachfolgend anhand von in der Zeichnung dargestellten bevorzugten Ausführungsbeispielen, auf die sie jedoch nicht beschränkt sein soll, noch weiter erläutert. Es zeigen:
Fig.1 einen Schaltkreis einer herkömmlichen Daten-Empfangsschaltung;
Fig.2 ein Diagramm zur Veranschaulichung des Nutzsignal/Rausch-Verhältnisses beim Schaltkreis nach Fig.1;
Fig.3 ein Blockschaltbild einer erfindungsgemäßen Daten-Empfangsschaltung;
Fig.4 ein Diagramm zur Erläuterung der Funktion eines Teils der Daten-Empfangsschaltung nach Fig.3; und
Fig.5 ein Schaltbild eines Teils einer zumindest derzeit besonders bevorzugten Ausführungsform der erfindungsgemäßen Daten-Empfangsschaltung.

Die in Fig.1 dargestellte herkömmliche Daten-Empfangsschaltung für Infrarotsignale besteht aus einem Infrarotdetektor, beispielsweise in Form einer oder mehrerer parallelgeschalteter Infrarot-Fotodioden 1, die an die Eingänge eines über einen Widerstand 2 gegengekoppelten Operationsverstärkers 3 angeschlossen sind. Die am Ausgang 4 des Operationsverstärkers 3 auftretende verstärkte Signalspannung U_{S} ist in Fig.2 in Abhängigkeit von der Zeit t dargestellt. Es ist ersichtlich, daß sich das von der Fotodiode 1 empfangene Nutzsignal U_{N} kaum von der Rauschspannung U_{R} abhebt, welche - wie eingangs erwähnt - hauptsächlich durch den Hintergrundlichtstrom bewirkt wird. Auch die Parallelschaltung der zusätzlichen Fotodioden 1, die in Fig.1 angedeutet ist, erbringt keine Verbesserung des Signal/Rauschverhältnisses, hingegen eine Verschlechterung der Schaltzeiten zufolge der erhöhten Kapazität.

Die Erfindung sieht nun vor, mehrere Eingangskreise und dabei mehrere Infrarot-Fotodioden 5a, 5b bis 5n in einer bestimmten Weise anzuordnen, nämlich jeweils mit einem separaten Verstärker 6a, 6b bis 6n, wobei die Ausgänge der Verstärker 6a, 6b bis 6n einem Summierkreis 7 zugeführt werden, wie das im Blockschaltbild nach Fig.3 dargestellt ist. Das Summensignal am Ausgang des Summierkreises 7 wird einem Hauptverstärker 9 zugeführt, an dessen Ausgang 10 der Eingang 11 eines Schwellenwertgenerators 12 sowie ein Eingang 13 eines Komparators 14 angeschlossen ist; der andere Eingang 15 des Komparators 14 ist mit dem Ausgang 16 des Schwellenwertgenerators 12 verbunden.

Das vom Hauptverstärker 9 abgegebene Signal U_{S} ist in Fig.4 in Abhängigkeit von der Zeit t dargestellt. Der Rauschspannung U_{R} sind beispielsweise ein starkes Datensignal U_{S1} und ein schwaches Datensignal U_{S2} überlagert. Das starke Datensignal U_{S1} kommt beispielsweise von einem direkt auf die Fotodioden 5a, 5b bis 5n gerichteten ersten Infrarotsender, wogegen das schwächere Datensignal U_{S2} von einem anderen, z.B. seitlich des ersten Infrarotsenders angeordneten zweiten Infrarotsender stammt und daher eine geringe Amplitude aufweist. Der Schwellenwertgenerator 12 ermittelt nun in Abhängigkeit vom Spitzenwert U_{Sp} des (stärksten) Datensignales U_{S1} und vom Mittelwert U_{Mw} des gesamten Signales U_{S} eine Schwellenwertspannung U_{Sch}, welche im Komparator 14 mit dem Nutz-Signal U_{S} verglichen wird, so daß zum Zeitpunkt des Über- bzw. Unterschreitens der Schwellenwertspannung U_{Sch} durch das Signal U_{S} am Ausgang 17 des Komparators 14 nur regenerierte Impulse U_{K} entsprechend dem Signal U_{S1} auftreten, die einer nachfolgenden Datenverarbeitungseinheit (nicht dargestellt) zwecks weiterer Verarbeitung zugeführt werden.

Auf diese Weise erfolgt eine selektive Signalauswertung, indem der Signal-/Rauschabstand bei Vorhandensein eines Datensignales erhöht und schwächere Datensignale anderer Sender unterdrückt werden. Insbesondere ist vorgesehen, daß die Schwellenwertspannung U_{Sch} aus dem Spitzenwert U_{Sp} und dem Mittelwert U_{Mw} ungefähr im Verhältnis 1:2 ermittelt wird. Die Arbeitsweise des Schwellenwertgenerators ist funktionell mit jener eines AGC (Automatic Gain Control)-Verstärkers vergleichbar.

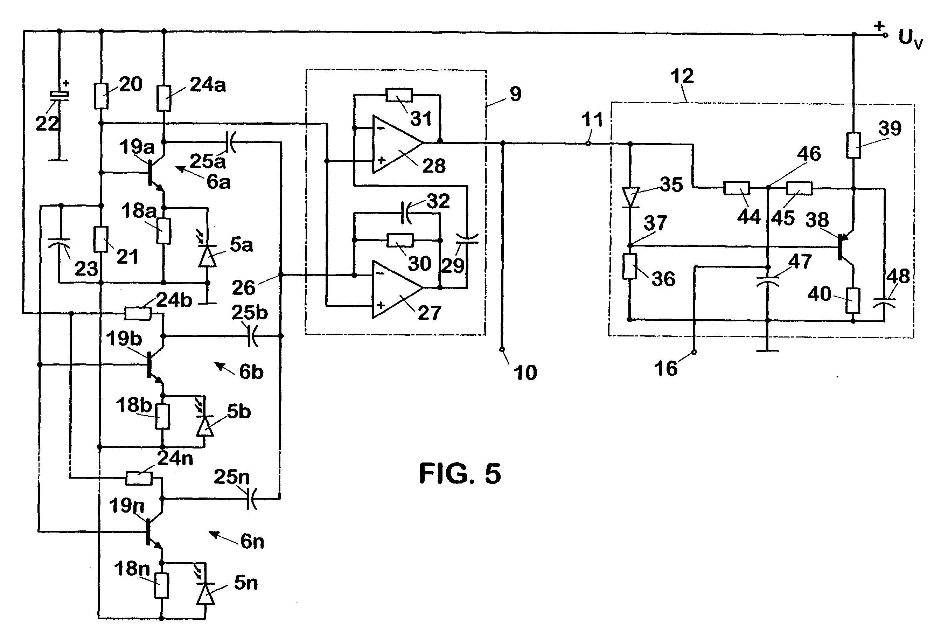

Anschließend wird eine praktische Ausführungsform der vorliegenden Daten-Empfangsschaltung (ohne Komparator 14) anhand der Fig.5 beschrieben.

Die Infrarot-Fotodioden 5a, 5b bis 5n liegen gemäß Fig.5 jeweils parallel zu einem Emitterwiderstand 18a, 18b bis 18n von npn-Transistoren 19a, 19b bis 19n, welche die oben anhand der Fig.3 erwähnten Verstärker 6a, 6b bis 6n bilden. Ein für alle Transistoren 18a, 18b bis 18n gemeinsamer Basis-Spannungsteiler wird durch Widerstände 20, 21 gebildet, wobei der Widerstand 20 mit einer positiven Versorgungsspannung U_{V} und der Widerstand 21 mit Masse verbunden ist; der Verbindungspunkt der beiden Widerstände 20, 21 ist mit den Basiselektroden der Transistoren 19a, 19b bis 19n verbunden. Ein Pufferkondensator 22 liegt zwischen Masse und der Versorgungsspannung U_{V}. Ein Siebkondensator 23 liegt parallel zum Widerstand 21.

Die Kollektoren der Transistoren 19a, 19b bis 19n sind jeweils über einen Kollektorwiderstand 24a, 24b bis 24n mit der Versorgungsspannung U_{V} verbunden. Von jedem Kollektor der Transistoren 19a, 19b bis 19n führt jeweils ein Koppelkondensator 25a, 25b bis 25n zu einem gemeinsamen Verbindungspunkt 26, um somit den oben anhand der Fig.3 erwähnten Summierkreis 7 für die von den Fotodioden 5a, 5b bis 5n gelieferten und über die Transistoren 19a, 19b bis 19n vorverstärkten Signale zu bilden, deren Rauschanteile sich am Verbindungspunkt 27 stochastisch überlagern, d.h. teilweise addieren und teilweise aufheben, während die Nutzsignale linear und mit gleicher Phasenlage addiert werden, so daß sich das Signal-/Rauschverhältnis mit der Anzahl n der Fotodioden 5 erhöht.

Der Hauptverstärker 9 besteht beispielsweise aus zwei hintereinandergeschalteten Operations-Verstärkern 27, 28, wobei der invertierende Eingang (-) des einen Verstärkers 27 mit dem Verbindungspunkt 26 der Koppelkondensatoren 25a, 25b bis 25n verbunden ist. Der Ausgang des Verstärkers 27 ist über einen Koppelkondensator 29 an den invertierenden Eingang (-) des anderen Verstärkers 28 angeschlossen, dessen Ausgang den Ausgang 10 des Hauptverstärkers 9 bildet. Die Verstärker 27, 28 sind über Widerstände 30, 31 gegengekoppelt, wobei zum Widerstand 30 des einen Verstärkers 27 ein Kondensator 32 parallelgeschaltet ist. Die nicht invertierenden Eingänge (+) der beiden Verstärker 27, 28 sind mit der Basis des Transistors 19a verbunden. Durch entsprechende Dimensionierung der Widerstände 30, 31 und der Kondensatoren 29, 32 kann die untere Grenzfrequenz des Hauptverstärkers selektiv an die Frequenz f₀ des Nutzsignales U_{N} angepaßt werden.

In Fig.5 sind die elektronischen Bauteilgruppen, welche den Hauptverstärker 9 bzw. den Schwellenwertgenerator 12 bilden, jeweils mit strichpunktierter Linie umrandet.

Vom Eingang 11 des Schwellenwertgenerators 12 führt eine Serienschaltung einer Diode 35 und eines Widerstandes 36 zur Masse. Der Verbindungspunkt 37 zwischen der Kathode der Diode 35 und dem Widerstand 36 ist an die Basis eines pnp-Transistors 38 angeschlossen, dessen Emitterwiderstand 39 mit der positiven Versorgungsspannung U_{V}, und dessen Kollektorwiderstand 40 mit Masse verbunden ist. Zwischen dem Eingang 11 des Schwellenwertgenerators 12 und dem Kollektor des pnp-Transistors 38 liegt ein Spannungsteiler, der aus zwei Widerständen 44 und 45 gebildet ist, wobei vom Verbindungspunkt 46 der beiden Widerstände 44, 45 ein Kondensator 47 gegen Masse geschaltet ist. Ein weiterer Kondensator 48 ist vom Kollektor des Transistors 38 gegen Masse geschaltet. Der Verbindungspunkt 46 der Widerstände 44, 45 bildet den Ausgang 16 des Schwellenwertgenerators, der das jeweils in Anpassung an die Stärke des (stärksten) Nutzsignals U_{S} am Punkt 10 bzw. 11 erzeugten variablen Schwellenwert U_{Sch} führt.

Von den oben erwähnten Modulationsarten wird vorzugsweise von der ASK-OOSK-Modulation Gebrauch gemacht, d.h. von einem Infrarotsender (nicht dargestellt) werden in an sich herkömmlicher Weise Serien von Infrarotimpuls-Paketen ausgestrahlt, die von den Fotodioden 5a, 5b bis 5n in elektrische Impulse umgewandelt werden und am Ausgang 10 (11) als Signal U_{S} auftreten.

Der Transistor 38 führt im Ruhezustand, d.h. wenn keine Impulse auftreten, einen geringen Kollektorruhestrom, der zur Aufladung des Kondensators 47 auf eine Spannung von etwa der Hälfte der Versorgungsspannung U_{V} führt. Der Arbeitspunkt des Transistors 38 ist so eingestellt, daß sich der Kondensator 48 ebenfalls auf einen Wert von etwa der Hälfte der Versorgungsspannung U_{V} auflädt.

Beim Auftreten von Impulsen wird der Transistor 38 bei jedem Impuls auf die Dauer des Impulses vollständig gesperrt, d.h. die Kondensatoren 47 und 48 werden während dieser Zeitspanne entladen und während den Impulspausen wieder aufgeladen. Durch die Wahl der Werte der Widerstände 36, 44 und 45 und Kondensatoren 47, 48 können nunmehr in Abhängigkeit von Impulsdauer und -pause die entsprechenden Zeitkonstanten für die Ladung und Entladung der Kondensatoren 47, 48 bzw. die Spannungen festgelegt werden, die dem Spitzenwert U_{Sp} bzw. dem Mittelwert U_{Mw} des Datensignales U_{S} entsprechen, um daraus die Schwellenwertspannung U_{Sch} im gewünschten Verhältnis zu ermitteln, wie oben angeführt wurde.

Die an der Diode 35 nach mehreren Impulsen, z.B. nach drei Impulsen, auftretende Spannung ist dem Gleichricht- bzw. Mittelwert U_{Mw} des Datensignales U_{S} proportional, während die am Kondensator 48 auftretende Spannung zum Spitzenwert U_{Sp} des Datensignales U_{S} proportional ist. Beide Spannungswerte werden jeweils über die Widerstände 44 und 45 am ihnen gemeinsamen Kondensator 47 integriert, und zwar im Verhältnis der Werte der Widerstände 44 und 45. Um das gewünschte Verhältnis von z.B. 1:2 aus dem Spitzenwert U_{Sp} und dem Mittelwert U_{Mw} zu erhalten, wird der Wert des Widerstandes 44 doppelt so groß wie der Wert des Widerstandes 45 gewählt. Selbstverständlich können auch andere Verhältnisse durch entsprechende Dimensionierung der Widerstände 44, 45 erzielt werden, wobei anstelle der beiden Widerstände 44, 45 auch ein Potentiometer zum wahlweisen kontinuierlichen Einstellen der Schwellenwertspannung U_{Sch} in Relation zum Spitzenwert U_{Sp} verwendet werden kann.

## Patentansprüche

1. Daten-Empfangsschaltung für Infrarotsignale, mit mehreren Eingangskreisen, je mit einer Fotodiode als Infrarotdetektor (5a, 5b bis 5n) und einem zugeordneten separaten Verstärker, deren Signale zur Erhöhung der Nutzleistung, bei Unterdrückung von Störsignalen, einem Summierkreis (7) zugeführt werden, **dadurch gekennzeichnet, dass** die separaten Verstärker Transistor-Verstärker (19a, 19b bis 19n) sind, dass die Transistor-Verstärker (19a, 19b bis 19n) in Emitterschaltung, jeweils mit zu Emitterwiderständen (18a, 18b bis 18n) parallel geschalteten Fotodioden, vorliegen, wobei ihre Kollektoren über Koppelkondensatoren (25a, 25b bis 25n) zur Bildung des Summierkreises mit einem gemeinsamen Verbindungspunkt (26) verbunden sind.

2. Daten-Empfangsschaltung nach Anspruch 1, **dadurch gekennzeichnet, dass** der Ausgang (8) des Summierkreises (7) mit einem Eingang (13) eines Komparators (14) verbunden ist, dessen anderer Eingang (15) mit dem Ausgang (16) eines Schwellenwertgenerators (12) verbunden ist, dessen Eingang (11) an den Ausgang (8) des Summierkreises (7) angeschlossen ist.

3. Daten-Empfangsschaltung nach Anspruch 2, **dadurch gekennzeichnet, dass** zwischen dem Ausgang (8) des Summierkreises (7) und dem einen Eingang (13) des Komparators (14) sowie dem Eingang (11) des Schwellenwertgenerators (12) ein Hauptverstärker (9) vorgesehen ist.

4. Daten-Empfangsschaltung nach Anspruch 2 oder 3, **dadurch gekennzeichnet, dass** der Schwellenwertgenerator (7) durch Gleichrichtung und Glättung des Ausgangs-Signals (U_{S}) des Summierkreises (7) bzw. gegebenenfalls des Hauptverstärkers (9) eine Summe aus dem Spitzenwert (U_{Sp}) und dem Mittelwert (U_{Mw}) dieses Signales (U_{S}) in einem vorherbestimmten Verhältnis bildet, welche Summe als Schwellenwertsignal (U_{Sch}) am Ausgang (11) des Schwellenwertgenerators (12) abgegeben wird.

5. Daten-Empfangsschaltung nach einem der Ansprüche 1 bis 4, **dadurch gekennzeichnet, dass** die Kondensatoren (25a, 25b bis 25n) des Summierkreises (7) an Kollektorwiderstände (24a, 24b bis 24n) der Transistoren (19a, 19b bis 19n) angeschlossen sind.

6. Daten-Empfangsschaltung nach Anspruch 4 oder 5, **dadurch gekennzeichnet, dass** der Eingang (11) des Schwellenwertgenerators (12) über eine Diode (35) und einen in Serie liegenden Widerstand (36) mit Masse verbunden ist, dass der Verbindungspunkt (37) zwischen der Diode (35) und dem Widerstand (36) an die Basis eines Transistors (38) angeschlossen ist, an den ein den Spitzenwert (U_{Sp}) des zugeführten Ausgangs-Signals des Summierkreises (7) bzw. gegebenenfalls Hauptverstärkers (9) speichernder Kondensator (48) angeschlossen ist, und dass ein weiterer Kondensator (47) zur Erzielung des jeweiligen Schwellenwerts (U_{Sch}) über eine Spannungsteilerschaltung (44, 45) an die Diode (35) bzw. an den Kondensator (48) angeschlossen ist.

## Claims

1. A data receiver circuit for infrared signals comprising several input circuits each having a photodiode as an infrared detector (5a, 5b to 5n) and an associated separate amplifier the signals of which are supplied to a summing circuit (7) to increase the useful power while suppressing interfering signals, **characterized in that** the separate amplifiers are transistor amplifiers (19a, 19b to 19n), that the transistor-amplifiers (19a, 19b to 19n) are provided in common emitter circuit, with respective photodiodes connected in parallel to emitter resistors (18a, 18b to 18n), their collectors being connected via coupling capacitors (25a, 25b to 25n) with a common connection point (26) so as to form the summing circuit.

2. A data receiver circuit according to claim 1, **characterized in that** the output (8) of the summing circuit (7) is connected to the input (13) of a comparator (14) the other input (15) of which is connected to the output (16) of a threshold value generator (12), the input (11) of which is connected to the output (8) of the summing circuit (7).

3. A data receiver circuit according to claim 2, **characterized in that** a main amplifier (9) is provided between the output (8) of the summing circuit (7) and the one input (13) of the comparator (14) as well as the input (11) of the threshold value generator (12).

4. A data receiver circuit according to claim 2 or 3, **characterized in that**, by rectifying and smoothening the output signal (Uₛ) of the summing circuit (7) and, optionally, of the main amplifier (9), the threshold value generator (12) forms a sum of the peak value (U_{Sp}) and the mean value (U_{Mw}) of this signal (Uₛ) in a pre-determined ratio, which sum is delivered as a threshold value signal (U_{Sch}) at the output (11) of the threshold value generator (12).

5. A data receiver circuit according to any one of claims 1 to 4, **characterized in that** the capacitors (25a, 25b to 25n) of the summing circuit (7) are connected to collector resistors (24a, 24b to 24n) of the transistors (19a, 19b to 19n).

6. A data receiver circuit according to claim 4 or 5, **characterized in that** the input (11) of the threshold value generator (12) is connected to ground via a diode (35) and a resistor (36) arranged in series, that the connection point (37) between the diode (35) and the resistor (36) is connected to the base of a transistor (38) to which a capacitor (48) storing the peak value (U_{Sp}) of the supplied output signal of the summing circuit (7), and, optionally, of the main amplifier (9) is connected, and that a further capacitor (47) is connected to the diode (35), or to the capacitor (48), respectively, to obtain the respective threshold value (U_{Sch}) via a voltage divider circuit (44, 45).

## Revendications

1. Circuit de réception de données pour des signaux infrarouges comportant plusieurs circuits d'entrée, comportant chacune une photodiode en tant que détecteur d'infrarouge (5a, 5b à 5n) et un amplificateur séparé associé, dont les signaux sont envoyés à un circuit de sommation (7) pour accroître la puissance utile, moyennant une suppression de signaux parasites, **caractérisé en ce que** les amplificateurs séparés sont des amplificateurs à transistors (19a, 19b à 19n), que les amplificateurs à transistors (19a, 19b à 19n) sont branchés selon un montage en émetteur suiveur, respectivement avec des photodiodes branchées en parallèle avec des résistances d'émetteur (18a, 18b à 18n), leurs collecteurs étant reliés par l'intermédiaire de condensateurs de couplage (25a, 25b à 25n) pour former le circuit de sommation avec un point de jonction commun (26).

2. Circuit de réception de données selon la revendication 1, **caractérisé en ce que** la sortie (8) du circuit de sommation (7) est reliée à une entrée (13) d'un comparateur (14), dont l'autre entrée (15) est reliée à la sortie (16) d'un générateur de valeurs de seuil (12), dont l'entrée (11) est raccordée à la sortie (8) du circuit de sommation (7).

3. Circuit de réception de données selon la revendication 2, **caractérisé en ce qu'**un amplificateur principal (9) est prévu entre la sortie (8) du circuit de sommation (7) et une entrée (13) du comparateur (11) ainsi que l'entrée (11) du générateur de valeur de seuil (12).

4. Circuit de réception de données selon la revendication 2 ou 3, **caractérisé en ce que** le générateur de valeur de seuil (12) forme, par redressement et lissage du signal de sortie (U_{S}) du circuit de sommation (7) ou éventuellement de l'amplificateur principal (9), une somme de la valeur maximale (U_{Sp}) et de la valeur moyenne (U_{Mw}) de ce signal (U_{S}) dans un rapport prédéterminé, laquelle somme est délivrée en tant que signal de valeur de seul (U_{Sch}) à la sortie (11) du générateur de valeur de seuil (12).

5. Circuit de réception de données selon l'une des revendications 1 à 4, **caractérisé en ce que** les condensateurs (25a, 25b à 25n) du circuit de sommation (7) sont connectés à des résistances de collecteurs (24a, 24b à 24n) des transistors (19a, 19b à 19n).

6. Circuit de réception de données selon la revendication 4 ou 5, **caractérisé en ce que** l'entrée (11) du générateur de valeurs de seuil (12) est reliée à la masse par l'intermédiaire d'une diode (35) et d'une résistance (36) branchée en série, que le point de jonction (37) entre la diode (35) et la résistance (36) est connecté à la base d'un transistor (38), duquel est connecté un condensateur (48) qui mémorise la valeur maximale (U_{Sp}) du signal de sortie envoyé du circuit de sommation (7) et éventuellement de l'amplificateur principal (9), et qu'un autre transistor (47) est connecté, pour l'obtention de la valeur de seuil respective (U_{Sch}), à la diode (35) et au condensateur (48) par l'intermédiaire d'un circuit diviseur de tension (44, 45).
